# DEMANDE DE BREVET EUROPEEN

(11) **EP 1 967 705 A1**
(43) Date de publication de la demande: **10.09.2008**
(21) Numéro de dépôt: 08300086.9
(22) Date de dépôt: 12.02.2008
(51) Int. Cl.: F01L 3/06, F02F 1/42

(54) **Siège de soupape pour conduit d'admission, culasse de moteur thermique, et procédé de fabrication**

(30) Priorité: 07.03.2007 FR 0753683
(71) Demandeur: Renault SAS, 92100 Boulogne Billancourt (FR)
(72) Inventeur: MAMY, Laurence, 92500, RUEIL MALMAISON (FR); WILLIAM, Johann, 92150, SURESNES (FR)

(57) **Abrégé**

Siège de soupape (3) rapporté pour conduit d'admission (1) de moteur thermique, caractérisé en ce qu'il présente à partir d'un rebord (3a) sensiblement aligné sur la face feu de la culasse, une zone de transition (3b) vers un secteur cylindrique (3c), suivie d'une première face (3d) inclinée vers le haut et le centre du conduit.

## Description

La présente invention concerne un moteur thermique de véhicule automobile.

Elle se rapporte en particulier à une culasse de moteur thermique, comportant au moins un conduit d'admission moulé, débouchant dans une chambre de combustion, par un tronçon final coudé portant dans un logement, à son extrémité, un élément annulaire rapporté formant siège de soupape.

L'invention porte sur le moteur, la culasse, le conduit et le siège de soupape, les organes proposés étant conçus pour générer un mouvement tourbillonnaire de « tumble », c'est-à-dire autour d'un axe de rotation sensiblement horizontal, dans la chambre de combustion où débouche le conduit d'admission.

L'invention concerne également le procédé de fabrication de la culasse concernée.

La réalisation d'un écoulement favorable au « tumble », à l'arrivée du conduit d'admission dans la chambre de combustion, nécessite une configuration aérodynamique particulière du conduit. Cette configuration doit pouvoir être mise en oeuvre de manière fiable et reproductible, lors de la fabrication de la culasse.

Des innovations récentes en matière de conduit d'admission et de « tumble », consistent à réaliser des usinages tronconiques, en extrémité des conduits d'admission.

L'usinage conique permet de créer une marche dans la zone arrière de la soupape, qui est favorable au « tumble ». Toutefois, ce type d'usinage est difficilement compatible avec la géométrie des sièges de soupape connus.

En effet, les dispersions de fonderie, qui apparaissent lors du moulage de la culasse, se retrouvent au niveau du raccord entre le conduit et le siège, en se traduisant par une augmentation ou une diminution de la hauteur de la marche rencontrée par le flux d'air en arrière de la soupape. Ces variations de hauteur sont préjudiciables à la robustesse du « tumble ».

La présente invention vise à contrôler la hauteur de marche en réalisée en arrière de la soupape, en vue d'assurer la robustesse du niveau de « tumble » souhaité.

Dans ce but, elle propose une nouvelle géométrie de siège de soupape : à partir d'un rebord sensiblement aligné sur la face feu de la culasse, le siège présente une zone de transition vers un secteur cylindrique, suivie d'une première face inclinée vers le haut et le centre du conduit

De préférence, la première face inclinée se termine par une arête vive, qui est suivie d'une deuxième face inclinée vers le haut et l'extérieur du conduit. L'arête forme un angle aigu, dont le sommet est orienté vers le centre du conduit.

Comme indiqué plus haut, l'invention propose également un nouveau conduit d'admission et une culasse comportant ce conduit.

Le nouveau siège vise à disposer, en extrémité du conduit, d'une configuration qui n'est pas altérée par les dispersions de fonderie.

Un tel résultat est obtenu de préférence en fabriquant la culasse de la façon suivante:
- une première étape de moulage de la culasse,
- une deuxième étape d'usinage de calibrage d'un logement annulaire à l'extrémité du conduit débouchant dans la chambre de combustion, et
- une troisième étape d'insertion d'un élément annulaire dans le logement.

D'autres caractéristiques et avantages de l'invention apparaîtront clairement à la lecture de la rescription suivante d'un mode de réalisation non limitatif de celle-ci, en se reportant aux dessins annexés, sur lesquels:
- la figure 1 montre un « brut » de conduit d'admission, associé à un usinage de calibrage conique, avec un siège de soupape connu,
- la figure 2 est une coupe du siège de soupape et de l'extrémité du conduit d'admission, proposés par l'invention,
- la figure 3 est un agrandissement partiel de la figure 2, et
- les figures 4 et 5 illustrent deux étapes intermédiaires du procédé de l'invention.

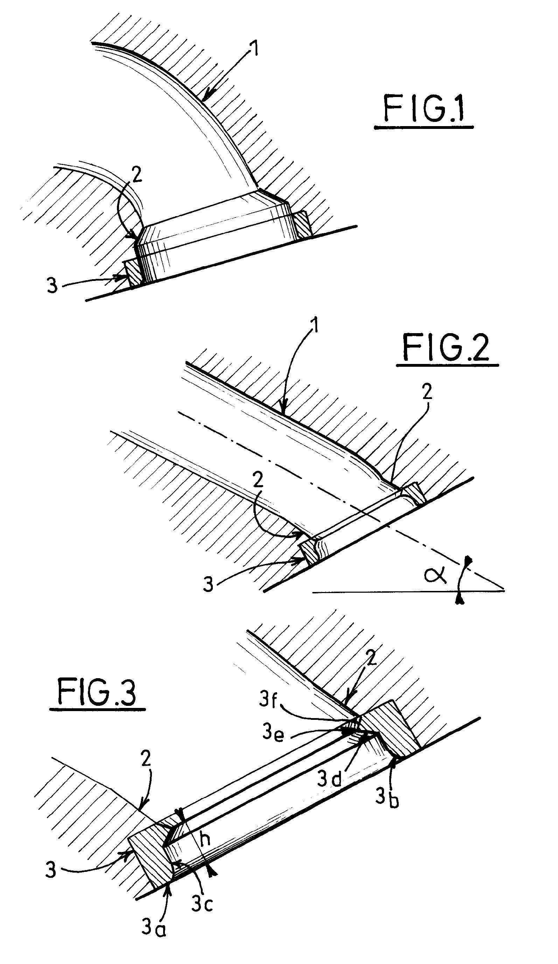

Sur la figure 1, on a représenté en coupe un conduit d'admission 1 de type « tumble », dont l'extrémité inférieure 2 présente un profil conique, associé à un siège de soupape conventionnel 3. Comme indiqué plus haut, l'usinage conique permet de créer une marche dans la zone arrière de la soupape, permettant de guider l'air vers le haut, selon une trajectoire favorable au « tumble »

Le profil de la figure 1 (qui est obtenu par exemple en usinant l'extrémité du conduit au moyen d'une ogive conique), permet d'assurer la continuité de la pente de la génératrice supérieure du « brut », avec la partie usinée conique. Toutefois, pour garantir la continuité souhaitée, il est nécessaire d'ajuster l'angle de cône de l'outil, par rapport à la pente du brut, en tenant compte de la dispersion de celui-ci. Ainsi, lorsque le brut est en retrait par rapport à sa position de référence, l'angle de cône de l'outil doit pouvoir rattraper ce retrait, pour éviter l'apparition d'un décrochement à la jonction de la partie conique du conduit. Sinon, on n'obtiendrait pas la continuité souhaitée.

Sur la figure 2, on a représenté un conduit d'admission de moteur thermique moulé débouchant dans une chambre de combustion de celui-ci par un tronçon final coudé portant à son extrémité, dans un logement 4, un élément annulaire 3 rapporté, formant siège de soupape. Le schéma permet de distinguer la partie usinée 2, en bas du conduit brut 1.

Le siège de soupape 3 de la figure 2, présente en coupe une géométrie spécifique, qu'on retrouve sur l'agrandissement de la figure 3. Cette géométrie peut être décrite de la façon suivante. A partir d'un rebord 3a, sensiblement aligné sur la face feu de la culasse, le siège 3 présente une zone de transition 3b vers un secteur cylindrique 3c (la zone 3b peut par exemple présenter une pente par rapport à 3a). Une première face 3d, inclinée vers le haut et le centre du conduit, suit le secteur cylindrique 3c, et se termine par une arête vive 3e. Celle-ci est suivie d'une deuxième face 3f, inclinée cette fois vers le haut et l'extérieur du conduit. La première et la deuxième face inclinées 3d, 3f forment entre elles l'arête 3e, selon un angle aigu, dont le sommet est orienté vers le centre du conduit.

Le premier intérêt de cette géométrie, est de favoriser le « tumble », en bénéficiant, à l'arrière de la soupape (partie gauche de la coupe), d'une arête plus vive et d'une hauteur h de « tremplin », ou de « marche » plus importante, qu'avec un siège connu, tel que celui de la figure 1. La « marche » très prononcée, qui est ainsi obtenue, oriente le gaz vers l'avant de la soupape au détriment de l'arrière, selon une trajectoire favorable au mouvement de « tumble » à l'intérieur de la chambre de combustion.

Un autre avantage de cette géométrie, est que le siège de soupape proposé est compatible avec des conduits plus inclinés vers le bas que les sièges connus (angle a réduit), étant donné que l'inclinaison du conduit par rapport à la face feu, est aussi en elle-même, très favorable au « tumble ».

Par ailleurs, l'emplacement de l'arête 3e dépend uniquement de la hauteur du siège, et non de l'usinage. Il en résulte une meilleure robustesse du « tumble ».

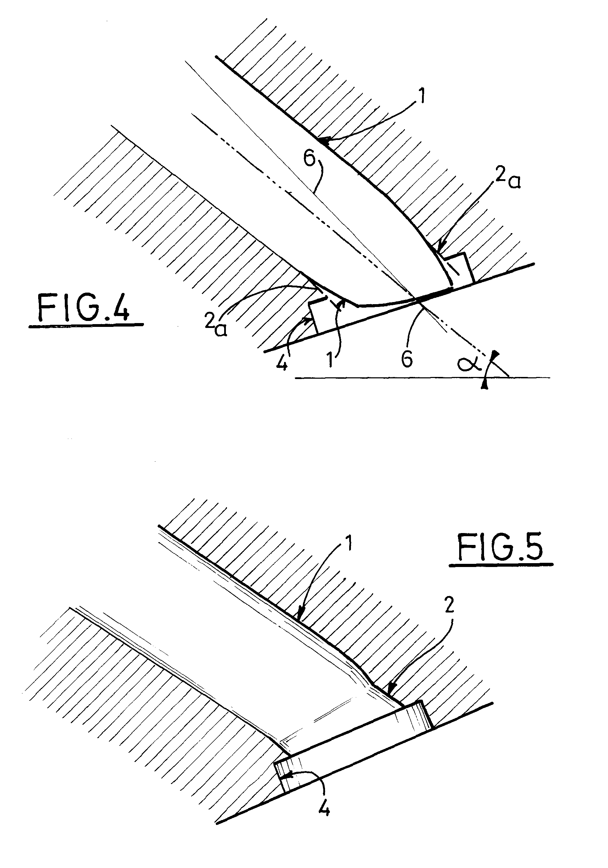

Enfin, l'adoption d'un tel siège de soupape permet de simplifier et de fiabiliser la réalisation du conduit. A partir d'une culasse avec un conduit et un logement de siège de soupape bruts de fonderie, on commence de préférence par usiner le raccord entre le conduit et le logement. La figure 4 met en évidence la forme initiale du conduit brut 1 avec le logement 4 du siège de soupape 3, la trace de l'usinage 2a, ainsi que le décalage de l'axe d'usinage 6 (c'est-à-dire l'axe de l'outil, qui est adaptée à la forme du conduit), par rapport à l'inclinaison α du conduit.

La figure 5, où l'on reconnaît les zones usinées 2, montre le résultat de cette opération. L'étape suivante est l'insertion du siège 3 dans le logement 4. Contrairement aux méthodes connues, l'invention propose donc de calibrer par usinage le raccord entre le conduit et le logement du siège, avant l'insertion du siège. Le résultat final est illustré par la figure 1.

Le procédé de fabrication de culasse proposé comporte donc les étapes suivantes :
- une première étape de moulage de la culasse,
- une deuxième étape d'usinage de calibrage d'un logement annulaire, à l'extrémité du conduit débouchant dans la chambre de combustion,
- une troisième étape d'insertion d'un élément annulaire dans le logement.

Ainsi, le raccordement entre le conduit et le logement du siège de soupape est calibré par usinage, en l'absence du siège de soupape

Un tel procédé est très avantageux, car l'usinage du raccordement entre le conduit et le logement de siège, est beaucoup plus facile à réaliser, sans le siège, qu'en présence de celui-ci. En particulier, l'usinage concerne le conduit, mais ne touche pas le siège, qui est introduit après, et qui dispose en lui-même d'un profil apte à obtenir le niveau de « tumble » souhaité.

Le siège proposé est parfaitement compatible avec ce procédé, puisqu'il définit lui-même la hauteur du tremplin, en particulier à l'arrière de la soupape, sans que la précision de l'opération d'usinage n'influe sur le résultat final. En effet, comme indiqué ci-dessus, la hauteur de l'arête dépend uniquement de la hauteur du siège. Ce procédé assure l'indépendance du niveau de « tumble » recherché avec le nouveau siège proposé, vis-à-vis des dispersions de fabrication du conduit et vis-à-vis de l'angle de cône de son outil d'usinage. Il est donc garant de la robustesse du « tumble ».

## Revendications

1. Siège de soupape (3) rapporté pour conduit d'admission (1) de moteur thermique, **caractérisé en ce qu'**il présente à partir d'un rebord (3a) sensiblement aligné sur la face feu de la culasse, une zone de transition (3b) vers un secteur cylindrique (3c), suivie d'une première face (3d) inclinée vers le haut et le centre du conduit, qui se termine par une arête vive (3e) et qui est suivie d'une deuxième face (3f) inclinée vers le haut et l'extérieur du conduit.

2. Siège de soupape (3) selon la revendication 1, **caractérisé en ce que** l'arête (3e) forme un angle aigu dont le sommet est orienté vers le centre du conduit.

3. Conduit d'admission (1) de moteur thermique moulé débouchant dans une chambre de combustion de celui-ci par un tronçon final coudé portant à son extrémité dans un logement (4) un élément annulaire (3) rapporté formant siège de soupape de géométrie conforme à l'une des revendications 1 ou 2, **caractérisé en ce que** le raccordement entre le conduit (1) et le logement (4) est calibré par usinage en l'absence du siège de soupape (3).

4. Culasse de moteur thermique, **caractérisée en ce qu'**au moins un de ses conduits d'admission (1) est muni d'un siège de soupape (3) conforme à l'une des revendications 1 ou 2.

5. Culasse de moteur thermique **caractérisé en ce qu'**elle présente au moins un conduit d'admission (1) conforme à la revendication 3.

6. Moteur thermique, **caractérisé en ce que** sa culasse est conforme à la revendication 4 ou 5.

7. Procédé de fabrication d'une culasse de moteur thermique **caractérisé en ce qu'**il comporte au moins :
- une première étape de moulage de la culasse,
- une deuxième étape d'usinage de calibrage d'un logement annulaire à l'extrémité du conduit débouchant dans la chambre de combustion,
- une troisième étape d'insertion d'un élément annulaire dans le logement.
